# EUROPEAN PATENT SPECIFICATION

(11) **EP 1 787 507 B1**
(45) Date of publication and mention of the grant of the patent: **20.07.2011**
(21) Application number: 06254437.4
(22) Date of filing: 24.08.2006
(51) Int. Cl.: A01G 3/053, B27B 17/00

(54) **Power tool**
Kraftwerkzeug
Outil motorisé

(30) Priority: 21.11.2005 GB 0523650
(43) Date of publication of application: 23.05.2007
(73) Proprietor: Husqvarna UK Limited, County Durham, DL5 6UP (GB)
(72) Inventor: Keyton, Richard, Newton Aycliffe County Durham DL5 7LL (GB); Douglas, James S., Darlington County Durham DL3 9JE (GB)
(74) Representative: Pratt, David Martin

(56) References cited:
- EP-A- 0 750 836
- EP-A- 1 212 935
- WO-A-03/103881
- FR-A- 2 882 625
- GB-A- 2 291 744
- GB-A- 2 390 324
- JP-A- 11 275 961

## Description

This invention relates to a power tool, and in particular to an electrically-operated portable power tool such as a hedge trimmer, an electric saw or a chain saw.

This type of power tool is typically formed with a main body having a motor and a working implement in drivable engagement with the motor. The tool is provided with a main handle which is provided with an actuator for operation by the user, and with an auxiliary support handle to permit two-handed operation of the tool, thereby providing greater stability in use. A second auxiliary handle may also be provided, as in EP 1 212 935 A.

The two support handles of known power tools of this type are limited to close quarters operation, owing to the close proximity between the main and auxiliary support handles and to the close proximity between the handles and the working implement. In other words, the position and spacing of the two handles provides for adequate operation and manoevrability at close quarters work, but does not provide for operation where the user is required to use the tool in an arms length position. For example, where a hedge trimmer needs to be operated at arms length to engage, for example, the top of a hedge or the sides of a tall hedge, there is a tendency for the user to remove one hand in an attempt to operate the hedge trimmer in a one-handed manner. This one-handed operation is prevented, for safety reasons, by the incorporation of safety devices which require actuators on both handles to be operated simultaneously. The tool can, however, be operated on the top of a hedge, or at the sides of a tall hedge, by an alternative arrangement of handles and actuators to extend the range of operation of the tool.

One known way of overcoming this problem is to provide such a power tool with extension handles which are movable from a first, non-operational position, in which they lie adjacent to the main body of the tool, to a second, operational position, in which they are pivoted out to extend away from the main body in a direction opposite to that in which the working implement extends. Unfortunately, although the use of extension handles increases the stability of such a power tool, there are difficulties in ensuring that the tool can only be operated by the actuation of two actuators, it being difficult to actuate the actuators on the main and auxiliary handles whilst holding either the main handle or the auxiliary handle with one hand and an extension handle with the other hand.

An aim of the invention is to provide a power tool which does not have these disadvantages.

The present invention provides a power tool comprising a main body housing a motor, a working implement in drivable engagement with the motor, the working implement extending away from the main body in a first direction, and a handle assembly associated with the main body, the handle assembly having a main handle positioned to extend away from the main body in a second direction opposite to the first direction, a first auxiliary handle positioned to extend away from the main body in the first direction, and a second auxiliary handle positioned to extend away from the main handle in the second direction, wherein the main handle and the second auxiliary handle are constituted by respective closed-loop portions of the handle assembly.

In a preferred embodiment, the main handle, the first auxiliary handle and the second auxiliary handle are integrally formed with the main body.

Advantageously, each of the handles is provided with an actuator for turning the motor on and off.

Conveniently, the motor is an electric motor which is provided with an electric switch, and the tool further comprises electrical circuitry linking the motor and the switch, the arrangement being such that the electric switch can only be actuated upon operation of two of the actuators. Preferably, the arrangement is such that the electric switch can only be actuated by actuation of the actuator associated with the main handle and one of the actuators associated with either of the auxiliary handles.

In a preferred embodiment, the tool further comprises a lock-off member associated with the actuator of the main handle, the lock-off member being engageable with said actuator by means of an interlock, and the lock-off member being movable between two operating positions in which, respectively, the interlock prevents or permits movement of said actuator.

In a preferred embodiment, the power tool is a hedge trimmer, the working implement being constituted by a pair of reciprocable blades.

First and second forms of a hedge trimmer, each of which is constructed in accordance with the invention, will now be described in greater detail, by way of example, with reference to the drawings, in which:-
Figure 1 is a side elevation of the first form of hedge trimmer;
Figure 2 is a side elevation of the second form of hedge trimmer; and
Figure 3 is a plan view of the second form of hedge trimmer.

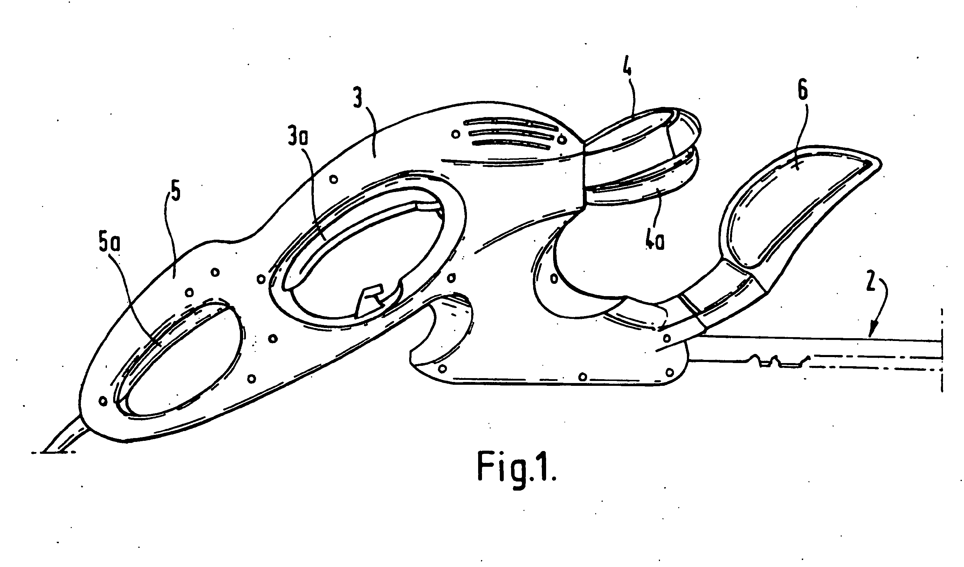

Referring to the drawings, Figure 1 shows an electrically-powered hedge trimmer comprising a main body 1 housing an electric motor (not shown). The motor is in drivable engagement with an elongate cutter 2 in the form of a pair of reciprocable blades.

The hedge trimmer is provided with a handle assembly constituted by a main handle 3 positioned immediately on that side of the main body 1 remote from the cutter 2, a first auxiliary handle 4 provided on that side of the main body 1 adjacent to the cutter 2, and a second auxiliary handle 5 positioned on that side of the main handle remote from the main body. The handles 3, 4 and 5 are provided with respective actuators 3a, 4a and 5a. The actuators 3a, 4a and 5a are arranged in such a manner that the motor can be turned on and off by operation of the actuator 3a in conjunction with either the actuator 4a or the actuator 5a. For example, the electric motor may be controlled by an electric switch (not shown) which can be actuated only by operation of the actuator 3a in conjunction with either of the actuators 4a and 5a. A guard 6 made of a substantially transparent plastics material is positioned between the first auxiliary handle 4 and the cutter 2.

In a first operating position, the user operates the hedge trimmer by gripping the main handle 3 and the first auxiliary handle 4, and turns the motor on and off by operating the actuators 3a and 4a. This is the normal operating position for close quarters work, the handles 3 and 4 being positioned so that the hedge trimmer is supported in the region of its centre of gravity, thereby ensuring that the hedge trimmer is well balanced and easy to operate.

In a second operating position, the user operates the hedge trimmer by gripping the main handle 3 and the second auxiliary handle 5, and turns the motor on and off by operating the two actuators 3a and 5a. In this position, the user can operate the hedge trimmer in an extended position.

The hedge trimmer is, therefore, so constructed that its motor can only be switched on by a two-handed operation.

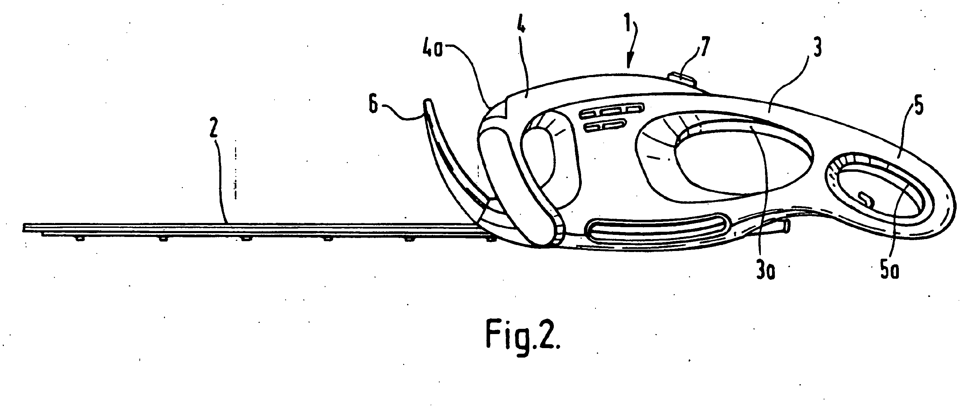

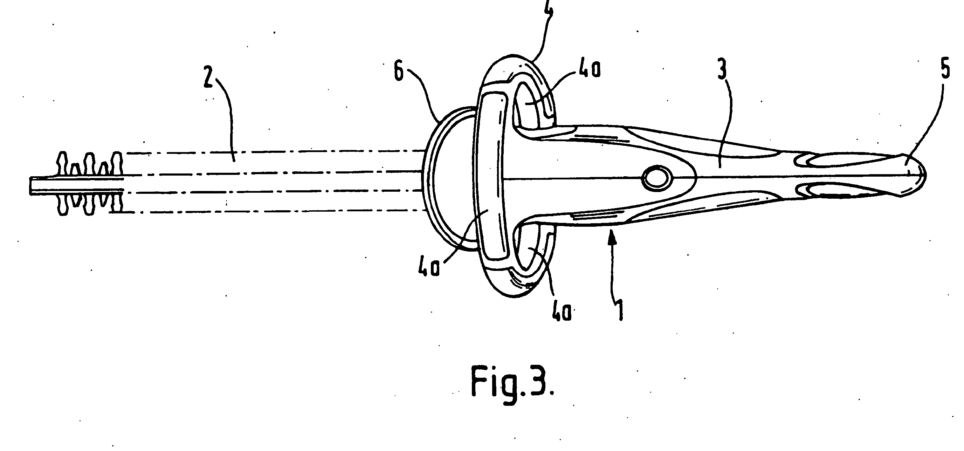

Figures 2 and 3 show the second form of hedge trimmer. This is a modified form of the hedge trimmer shown in Figure 1, and so like reference numerals are used for like parts, and only the modifications will be described in detail. The main modification is the provision of a lock-off button 7 provided at the top of the main handle 3. The lock-off button has an interlock (not shown) with the actuator 3a, so that that actuator cannot be actuated until the lock-off button is slid forwards from the position shown (in which the interlock prevents movement of that actuator 3a) to a position in which the interlock does not so prevent movement of that actuator.

In the first operating position, the user must place the fingers of one hand within the loop-shaped handle 3 and the fingers of the other hand within the looped-shaped handle 4.

The only other modification is that the first auxiliary handle 4 of the embodiment of Figures 2 and 3 is a loop-shaped handle whose loop is generally at right angles to the plane of the cutter 2 (rather than being substantially parallel to that plane as was the case with the embodiment of Figure 1). This handle 4 is provided with respective actuators 4a at the top of the loop, and at each side of the loop, so that, in the first operating position, the user can operate the hedge trimmer by gripping the main handle 3 and the first auxiliary handle 4, and can turn the motor on or off by operating the actuator 3a and any one of the actuators 4a.

The provision of the lock-off button in the embodiment of Figures 2 and 3 ensures two-handed operation in the second operating position in which the operator grips the handles 3 and 5, even if the operator has hands large enough for both the actuators 3a and 5a to be actuated by one hand.

It will be apparent that modifications could be made to the hedge trimmers described above. For example, in each embodiment, the electric motor could be replaced by any other suitable form of prime mover such as a petrol engine. In this case, the operation of the actuators 3a, 4a and 5a would be modified for actuation of such an engine. It would also be possible to modify the hedge trimmer of Figure 1 by incorporating the lock-off button and interlock of the hedge trimmer of Figures 2 and 3.

## Claims

1. A power tool comprising a main body (1) housing a motor, a working implement (2) in drivable engagement with the motor, the working implement extending away from the main body in a first direction, and a handle assembly (3, 4, 5) associated with the main body, the handle assembly having a main handle (3) positioned to extend away from the main body in a second direction opposite to the first direction, a first auxiliary handle (4) positioned to extend away from the main body in the first direction, and a second auxiliary handle (5) positioned to extend away from the main handle in the second direction, wherein the main handle and the second auxiliary handle are constituted by respective closed-loop portions of the handle assembly.

2. A power tool as claimed in claim 1, wherein the main handle (3), the first auxiliary handle (4) and the second auxiliary handle (5) are integrally formed with the main body (1).

3. A power tool as claimed in claim 1 or claim 2, wherein each of the handles (3, 4, 5) is provided with a respective actuator (3a, 4a, 5a) for turning the motor on and off.

4. A power tool as claimed in claim 3, wherein the motor is an electric motor which is provided with an electric switch, and the tool further comprises electrical circuitry linking the motor and the switch, the arrangement being such that the electric switch can only be actuated upon operation of two of the actuators (3a, 4a, 5a).

5. A power tool as claimed in claim 4, wherein the arrangement is such that the electric switch can only be actuated by actuation of the actuator (3a) associated with the main handle (3) and one of the actuators (4a, 5a) associated with either of the auxiliary handles (4, 5).

6. A power tool as claimed in any one of claims 3 to 5, further comprising a lock-off member (7) associated with the actuator (3a) of the main handle (3), the lock-off member being engageable with said actuator by means of an interlock, and the lock-off member being movable between two operating positions in which, respectively, the interlock prevents or permits movement of said actuator.

7. A power tool as claimed in any one of claims 1 to 6, wherein the power tool is a hedge trimmer, the working implement being constituted by a pair of reciprocable blades (2).

## Patentansprüche

1. Kraftbetriebenes Werkzeug mit einem Grundkörper (1), welcher einen Motor aufnimmt, einem Arbeitsgerät (2), welches sich in einem antreibbaren Eingriff mit dem Motor befindet, wobei das Arbeitsgerät sich von dem Grundkörper in einer ersten Richtung weg erstreckt, und einer Handhabungsanordnung (3, 4, 5), welche mit dem Grundkörper verbunden ist, wobei die Handhabungsanordnung einen Hauptgriff (3), welcher angeordnet ist, um sich von dem Grundkörper in einer zweiten Richtung entgegengesetzt zu der ersten Richtung weg zu erstrecken, einen ersten Hilfsgriff (4), welcher angeordnet ist, um sich von dem Grundkörper in der ersten Richtung weg zu erstrecken, und einen zweiten Hilfsgriff (5) aufweist, welcher angeordnet ist, um sich von dem Hauptgriff in der zweiten Richtung weg zu erstrecken, wobei der Hauptgriff und der zweite Hilfsgriff durch jeweils geschlossene Kreisabschnitte der Handhabungsanordnung gebildet sind.

2. Kraftbetriebenes Werkzeug nach Anspruch 1, wobei der Hauptgriff (3), der erste Hilfsgriff (4) und der zweite Hilfsgriff (5) einteilig mit dem Grundkörper (1) ausgebildet sind.

3. Kraftbetriebenes Werkzeug nach Anspruch 1 oder Anspruch 2, wobei jeder der Griffe (3, 4, 5) mit einem jeweiligen Betätigungselement (3a, 4a, 5a) zum Ein- und Ausschalten des Motors ausgestattet ist.

4. Kraftbetriebenes Werkzeug nach Anspruch 3, wobei der Motor als ein elektrischer Motor ausgebildet ist, welcher mit einem elektrischen Schalter ausgebildet ist, und wobei das Werkzeug ferner einen elektrischen Schaltkreis aufweist, welcher den Motor und den Schalter miteinander verbindet, wobei die Anordnung derart ausgebildet ist, dass der elektrische Schalter lediglich bei Betrieb von zwei Betätigungselementen (3a, 4a, 5a) betätigbar ist.

5. Kraftbetriebenes Werkzeug nach Anspruch 4, wobei die Anordnung derart ausgebildet ist, dass der elektrische Schalter lediglich durch Betätigung des Betätigungselementes (3a) betätigbar ist, welches mit dem Hauptgriff (3) und einem der Betätigungselemente (3a, 4a, 5a), welches mit einem der Hilfsgriffe (4, 5) verbunden ist, betätigbar ist.

6. Kraftbetriebenes Werkzeug nach einem der Ansprüche 3 bis 5, wobei das Werkzeug ferner ein Verriegelungselement (7) aufweist, welches mit dem Betätigungselement (3a) des Hauptgriffs (3) verbunden ist, wobei das Verriegelungselement mittels einer Verriegelung mit dem Betätigungselement in Eingriff bringbar ist, und wobei das Verriegelungselement zwischen zwei Betriebsstellungen verstellbar ist, in welchen die Verriegelung eine Verstellung des Betätigungselementes entsprechend verhindert oder entsprechend ermöglicht.

7. Kraftbetriebenes Werkzeug nach einem der Ansprüche 1 bis 6, wobei das kraftbetriebene Werkzeug als Heckenschere ausgebildet ist, wobei das Arbeitsgerät durch zwei wechselseitige Klingen (2) ausgebildet ist.

## Revendications

1. Outil motorisé comprenant un corps principal (1) logeant un moteur, un accessoire de travail (2) en prise d'entraînement avec le moteur, l'accessoire de travail s'étendant en éloignement du corps principal dans une première direction, et un ensemble de poignée (3, 4, 5) associé au corps principal, l'ensemble de poignée ayant une poignée principale (3) positionnée pour s'étendre en éloignement du corps principal dans une deuxième direction opposée à la première direction, une première poignée auxiliaire (4) positionnée pour s'étendre en éloignement du corps principal de la première direction, et une deuxième poignée auxiliaire (5) positionnée pour s'étendre en éloignement du corps principal dans la deuxième direction, la poignée principale et la deuxième poignée auxiliaire étant constituées par des portions en boucle fermée respectives de l'ensemble de poignée.

2. Outil motorisé selon la revendication 1, dans lequel la poignée principale (3), la première poignée auxiliaire (4) et la deuxième poignée auxiliaire (5) sont formées solidairement avec le corps principal (1).

3. Outil motorisé selon la revendication 1 ou la revendication 2, dans lequel chacune des poignées (3, 4, 5) est dotée d'un actionneur (3a, 4a, 5a) respectif pour mettre le moteur en marche et à l'arrêt.

4. Outil motorisé selon la revendication 3, dans lequel le moteur est un moteur électrique qui est doté d'un interrupteur électrique, et l'outil comprend en outre une circuiterie électrique reliant le moteur et le commutateur, l'agencement étant tel que l'interrupteur électrique ne peut être actionné que lors du fonctionnement de deux des actionneurs (3a, 4a, 5a).

5. Outil motorisé selon la revendication 4, dans lequel l'agencement est tel que le commutateur électrique ne peut être actionné que par l'actionnement de l'actionneur (3a) associé à la poignée principale (3) et de l'un des actionneurs (4a, 5a) associé à l'une des poignées auxiliaires (4, 5).

6. Outil motorisé selon l'une quelconque des revendications 3 à 5, comprenant en outre un organe de verrouillage (7) associé à l'actionneur (3a) de la poignée principale (3), l'organe de verrouillage pouvant être mis en prise avec ledit actionneur au moyen d'un enclenchement, et l'organe de verrouillage étant mobile entre deux positions fonctionnelles dans lesquelles, respectivement, l'enclenchement empêche ou permet un mouvement dudit actionneur.

7. Outil motorisé selon l'une quelconque des revendications 1 à 6, dans lequel l'outil motorisé est un taille-haie, l'accessoire de travail étant constitué d'une paire de lames (2) pouvant faire l'objet d'un mouvement de va-et-vient.
